# EUROPÄISCHE PATENTSCHRIFT

(11) **EP 0 538 561 B1**
(45) Veröffentlichungstag und Bekanntmachung des Hinweises auf die Patenterteilung: **20.05.1998**
(21) Anmeldenummer: 92112121.6
(22) Anmeldetag: 17.07.1992
(51) Int. Cl.: C05F 17/00, C05F 3/00

(54) **Verfahren zur ammoniakemissionsfreien Herstellung von Humus aus einem Abfallstoff in Form von Gülle oder kommunalem Klärschlamm**
Process for the obtention of humus from wastes such as semi-liquid manure or sewage sludge without emission of ammonia
Procédé d'obtention d'humus à partir de déchets tels que du purin ou des boues d'épuration sans émission d'ammoniaque

(30) Priorität: 18.07.1991 DE 4123798
(43) Veröffentlichungstag der Anmeldung: 28.04.1993
(73) Patentinhaber: GROHNE GmbH, D-35789 Weilmünster (DE); Meier, Heinz, D-31139 Hildesheim (DE); Roetger-Rütgers, Hildegard, D-52078 Aachen (DE); Grohne, Rolf, D-35789 Weilmünster (DE); Scheffer, Kurt Dr., D-37133 Friedland (DE); ATEC AG, CH-8032 Zürich (CH)
(72) Erfinder: Meier, Heinz, D-3200 Hildesheim (DE)
(74) Vertreter: Menges, Rolf, Dipl.-Ing.

(56) Entgegenhaltungen:
- EP-A- 0 356 816
- DD-A- 144 047
- DE-A- 3 812 766
- MüNSTERLäNDER TAGESZEITUNG, 28 Mai 1990; A. HAUKE

## Beschreibung

Die Erfindung betrifft ein im Patentanspruch 1 definiertes Verfahren zur ammoniakemissionsfreien Herstellung von Humus aus einem Abfallstoff in Form von Gülle oder kommunalem Klärschlamm und außerdem die Verwendung des Humus gemäß Patentanspruch 11.

Die EP 0356816 A2 oder die identische DE 3828186 C1 macht ein Verfahren zur Umwandlung fester Abfallstoffe in Bodenverbesserungs-, Dünge- und/ oder Pflanzenwuchssubstratstoffe bekannt.

Diese Druckschrift beschreibt den Aufbau von Mieten in Schichten. Es sollen folgende Schichten übereinander angeordnet werden: Unterste Schicht: Sägemehl, darüber liegende Schicht: Grünzeug, darüber liegende Schicht: feuchtes Stroh, darüber liegende Schicht: Mist mit Gehalt an Rindermist, Deckschicht: Sägemehl.

Der Aufbau solcher Mieten ist technisch kompliziert und erfordert die Bereitstellung vieler Stoffe. Außerdem heißt es in der Beschreibung der EP 0356816 A2, dass auch Gülle mit verarbeitet werden kann. Es ist jedoch erforderlich, diese "mit Wasser im Verhältnis 1:1" zu verdünnen und "auf alle Schichten aufzubringen".

Eine solche Verdünnung von Gülle ist nachteilig und unwirtschaftlich, weil die Verarbeitungskapazität durch eine solche Verdünnung herabgesetzt wird.

Es kann sich also bei diesem Vorschlag nur um eine zusätzliche Mitverarbeitung von Gülle handeln und nicht um deren Verarbeitung als Hauptaufgabe. Es können mit diesem Verfahren also nicht die in der Praxis vorhandenen, ganz erheblichen Mengen des Gülleanfalles aufgearbeitet oder entsorgt werden.

Dieses Verfahren begrenzt aber auch den Einsatz von Gülle als flüssige Phase dadurch, dass ein vollständiges Einbinden nicht erreicht werden kann. Es sind die Schichtmaterialten teilweise nicht zur Adsorption geeignet, wie Grünzeug, bereits feuchtes Stroh und Mist.

Ein ähnliches Verfahren wie das vorstehende bekannte Verfahren ist aus der Münsterländischen Tageszeitung vom 28.05.1990 bekannt. Nach einem bestimmten Rezept sollen dabei Rohstoffe angemischt und aufgeschichtet werden, und als Endprodukt soll hochwertiger Humus aufallen. Der Material einsatz beträgt pro Kubikmeter Gülle ca. 88 kg Sägemehl und 8 kg unbearbeitetes Stroh, zuzüglich vorhandenes Rück gut aus einer vorhergehenden Rotte. Die flüssige Gülle soll zu einem festen Brei angerührt werden.

Die DE 3724551 A1 beschreibt die Aufbereitung von Müll und Abfällen, dem bakteriell schnell abbaufähige organische Düngemittel zugemischt werden sollen. Diese Druckschrift beschreibt auch die Vermischung organischer Fasern mit dem organischen Düngemittel. Sofern noch zusätzlich Gülle als Mischkomponente zugesetzt wird, soll diese erst durch chemische Behandlung geruchsfrei gemacht werden. Gülle soll auch vor der Vermischung getrocknet werden. Bei dem beschriebenen Gehalt von 1 bis 21% an Trockensubstanzen ist diese Eindampfung unwirtschaftlich. Diese Arbeitsweise ist nicht für die Entsorgung von Gülle aus der Massentierhaltung geeignet.

Die nicht vorveröffentlichte DE 4006239 A1 beschreibt ein Verfahren zur Entsorgung von Gülle oder Klärschlamm. Nach einer Vorkonditionierung der Gülle auf einen Wassergehalt von 65% und ein C/N- Verhältnis von 20-30:1, ein Schüttgewicht von bis 800 kg/m³ erfolgt eine kontinuierliche Kompostierung in einem belüfteten Reaktor bei 65-78°C unter Reduzierung des Wassergehaltes um 20-30%, danach erfolgt eine Nachkonditionierung bei 28-38°C und 90% Luftfeuchtigkeit bis 14 Tage unter Einstellung des Wassergehaltes auf 20-30%. Es werden Abfälle aus der Holzindustrie, Stroh, Algen, Pflanzen bei der Vorkonditionierung zugemischt.

Dieses Verfahren benutzt einen belüfteten Reaktor. Dagegen arbeitet das Verfahren nach der Erfindung praktisch anaerob.

Die oben bereits erwähnte DE 3828186 C1 beschreibt ein Verfahren zur Umwandlung fester Biomasse und nicht von flüssiger Gülle. Es werden übereinander angeordnete Schichten von fester Biomasse kompostiert, die Abfallstoffe der Land- und Forstwirtschaft sind.

Mit der Aufschichtung ist der Umsetzungsprozess sich selbst überlassen. Es ist jedoch ohne Massnahmen der Steuerung von Feuchtigkeit und Temperatur nicht möglich, Hemicellulosen in Humusmasse umzusetzen.

Die DE 3936068 C2 beschreibt ein Verfahren zur Kompostierung in mehreren Mieten von flüssigen Abfallstoffen. Es werde bei Raumtemperatur in einem Behälter der flüssige Abfallstoff mit bis 1,5% zurückgeführtem Kompost und mit bis 3% gehäckseltem oder gemahlenem Stroh vermischt unter Einbinden der flüssigen Phase. Die zerkleinerte Masse wird in einen Absetzbehälter überführt, die flüssige Phase abgetrennt und gelagert und die feste Phase zu mehreren Rotten aufgesetzt auf einer undurchlässigen Unterschicht und mit einer oberen Deckschicht.

In diesen Rotten wird durch Zugabe der flüssigen Phase aus dem Lagerbehälter die Rottetemperatur auf 60-70°C eingestellt und in den folgenden Rotten ohne Zugabe von flüssiger Phase zum fertigen Humus kompostiert.

Dieses Verfahren benötigt ein Rottefeld in einem geschlossenen Raum zum mehrfachen, mechanischem Umsetzen der in parallelen Reihen angeordneten Rottefelder.

Das Verfahren nach der Erfindung benötigt ein derartiges Rottefeld nicht.

Die DE 3611046 C2 beschreibt ein Verfahren zur Verottung von Gülle mit zerkleinertem Stroh in einem Gehäuse mit schrägliegenden Schächten, die das Gemisch durch Schwerkraft durchläuft, um dann entnommen zu werden.

Es wird zur Umsetzung Prozessluft eingeführt und mit dieser durch Entnahme und Zuführung die Temperatur im Rottegut geregelt.

Dieses Verfahren arbeitet mit aerober Prozessführung mit Umluft. Das Verfahren nach der Erfindung verwendet dagegen keine Prozessluft in einer solchen Anlage mit Schächten, sondern kompostiert die vermischte Gülle in einem praktisch anaeroben Prozess in Mieten.

Die DE 3805864 A1 beschreibt die Kompostierung von Gülle mit Sägemehl, Baumrinde, Stroh in einem Tunnelreaktor, in dem die zu kompostierende Masse mit einem Presschild durchgedrückt wird unter Abfluss des flüssigen Überschusses durch den perforierten Boden.

Bei dieser Umsetzung wird das Mischgut als Pressgut belüftet. Der ausgetretene Rohkompost wird auf einer Nachrottefläche in einer Trapezmiete aufgebracht bis zur Bildung des fertigen Humus.

Eine derartige Vorrichtung benötigt das Verfahren nach der Erfindung nicht. Diese setzt auch keine Gülle unter Belüftung um, sondern in anaerob betriebenen Mieten.

Gegenstand der Erfindung ist ein Verfahren zur Herstellung von Humus aus einem Abfallstoff in Form von Gülle oder von kommunalem Klärschlamm durch Kompostierung einer Mischung aus dem Abfallstoff, Stroh und Sägemehl in Mieten.

Es ist die Aufgabe der Erfindung, den erheblichen Anfall an flüssigen Abfallstoffen zu festen Humusprodukten durch ein Verfahren aufzuarbeiten und damit auch zu entsorgen, bei dem keine Ammoniakemissionen bei der biologischen Umwandlung aus der Miete austreten und in dem Endprodukt als Belästigung vorhanden sind. Außerdem soll für den so hergestellten Humus eine Verwendung angegeben werden.

Die Lösung der Aufgabe der Erfindung ist in den Ansprüchen 1 bzw. 11 definiert.

Bevorzugte Ausgestaltungen sind in den Unteransprüchen definiert.

Das in dem Verfahren der Erfindung verwendete Sägemehl kann aus Weichholz, wie aus Fichte und / oder Tanne und/ oder aus Baumrinde und/ oder aus Holz aus der Waldreinigung oder aus Schwachholz bestehen.

Die durch das Verfahren nach der Erfindung aufzubereitende Gülle hat beispielsweise die folgende Zusammensetzung:

| Rindergülle | | kg/m³ | | | |
|---|---|---|---|---|---|
| % TS | organische Substanz | N | P₂O₅ | K₂O | M_{g}O |
| 5 | 35.9 | 2,3 | 1,2 | 2,8 | 0,4 |
| 10 | 71,9 | 4,6 | 2,4 | 5,6 | 0,7 |
| 15 | 107,8 | 6,9 | 3,6 | 8,4 | 1,1 |

| Schweinegülle | | | | | |
|---|---|---|---|---|---|
| % TS | organische Substanz | N | P₂O₅ | K₂O | M_{g}O |
| 3,5 | 24,7 | 2,9 | 1,9 | 1,7 | 0,6 |
| 7 | 49,5 | 5,7 | 3,9 | 3,3 | 1,2 |
| 10,5 | 74,3 | 8,6 | 5,8 | 5,0 | 1,8 |

| Hühnergülle | | | | | |
|---|---|---|---|---|---|
| % TS | organische Substanz | N | P₂O₅ | K₂O | M_{g}O |
| 7 | 44,7 | 4,9 | 4,1 | 2,4 | 0,9 |
| 14 | 89,4 | 9,8 | 8,3 | 4,8 | 1,7 |
| 21 | 134,1 | 14,7 | 12,4 | 7,3 | 2,6 |

Der Anteil an NH₄-N an Gesamt-N beträgt beispielsweise:

| | Anteil NH₄-N Mittelwert | Gesamt-N Streubreite |
|---|---|---|
| Rindergülle | 55 | 35-81 % |
| Schweinegülle | 71 | 30-91 % |
| Hühnergülle | 58 | 36-84 % |

Baubriefe Landwirtschaft, 29/1968, Seite 47, Landwirtschaftsverlag Münster-Hiltrup

Aus diesen Beispielen ist ersichtlisch, welche Mengen an NH₄-N in die Atmosphäre gelangen können, die zu Stickoxiden aufoxidiert werden.

Dieses Problem ergibt sich auch daraus, dass in den alten und den neuen Bundesländern Gülle in einer Menge von etwa 350 - 400 .10⁶ m³ / Jahr und in den Altländern kommunale Klärschlämme in einer Menge von 50.10⁶ m³/ Jahr anfallen, berechnet auf einen Gehalt von 8% TS und 5kg N/m³.

Das Verfahren nach der Erfindung wird durch die folgenden Beispiele erläutert.

Beispiel 1,a: Es werden für eine erste Miete 1000kg Schweinegülle mit 70kg TS mit 50kg Stroh, das durch Shreddern auf eine Länge von 20 - 50 cm gebracht ist, entsprechend 5% auf die Güllemenge gerechnet, und mit 236kg Sägemehl in einem Zwangsmischer homogenisiert und dabei wird die flüssige Phase aus der Gülle praktisch vollständig eingebunden zu einem Stoffgemisch mit 27,7 % TS.

Dieses Gemisch wird nach dem Ausschnecken in grösserer Menge zum Aufsetzen einer Miete über ein am Mischer befindliches Förderband bis zu einer Höhe von etwa 3,50 m auf einer Unterschicht von 30 cm aus Sägemehl oder aus zerkleinertem Stroh oder aus Humus einer zuvor erzeugten Miete in einer Höhe von 20 - 25 cm aufgesetzt und mit einer Deckschicht aus Sägemehl oder aus dem Humus aus einer zuvor erzeugten Miete in Höhe von 30 cm bedeckt. Nach bereits 4 Monaten ist ein biologisch stabiler Humus von etwa 500kg erzeugt.

Beispiel 1,b: Es werden für eine zweite Miete 1000kg Schweinegülle mit 70kg TS mit 20kg in gleicher Weise zerkleinertem Stroh und mit 50kg Sägemehl und mit 270kg Humus aus einer zuvor erzeugten Miete in dem gleichen Mischer homogenisiert und dabei die flüssige Phase aus der Gülle praktisch vollständig eingebunden auf einen TS-Gehalt von 27%. Danach wird wie in 1,a verfahren, und zwar wird die erhaltene Mischung auf eine Unterschicht aus dem Humus der zuvor erzeugten Miete mit einer Höhe von etwa 20 cm aufgestezt und mit dem Humus der zuvor erzeugten Miete in einer Höhe von 30 cm bedeckt.

Nach etwa 4 Monaten ist ein biologisch stabiler Humus von etwa 525kg erzeugt. Dabei hat sich das ursprüngliche Volumen von 1m³ gerechnet, auf 1,3 m³ vergrössert.

Beispiel 1,c: Es werden in einer dritten Miete 1000kg mit 70kg TS mit 20kg in gleicher Weise zerkleinertem Stroh und mit 33kg Humus aus der zuvor erzeugten Miete eingebunden und in gleicher Weise auf einen TS-Gehalt von 26,7% durch Vermischen homogenisiert. Das Aufsetzen der Miete erfolgt auf einer Unterschicht wie in 1,b mit der gleichen Deckschicht.

Nach der biologischen Umsetzung wie in Beispiel 1,b wird nach etwa 4 Monaten ein stabiler Humus in einer Volumenvergrösserung von 1,0 m³ auf 1,5 m³ des ursprünglichen Volumens erzeugt.

Es wird alternativ mit einer Folie aus Kunststoff abgedeckt, um auch ein geringes Entweichen von Feuchtigkeit zu vermeiden. Durch diese zusätzliche Massnahme wird der Abbauprozess verlängert. Diese Massnahme wird dann insbesondere angewendet, wenn die Möglichkeit besteht, dass in dem flüssigen Abfallstoff auch Anteile an schwerer abbaubaren Stoffen mit enthalten sind.

Der alternative Zusatz von Pilzimpfstoffen ist dann vorteihaft, wenn die in der Gülle und im Klärschlamm an sich ausreichend vorhandenen Bakterien für eine Förderung der mikrobiellen Umsetzung unterstützt werden sollen.

Die Abdeckung und die Unterlage und damit auch die Umhüllung einer Miete dienen auch dazu, dieser die Wirkung eines wärmeisolierten Reaktors zu geben, die dazu auch praktisch ausreichend undurchlässig für Feuchtigkeit ist, sodass diese für die Umsetzung der Abfallstoffe in Humus genügend zur Verfügung steht.

Beispiel 1,d: Es werden für eine vierte Miete 1000kg Schweinegülle mit 70kg TS mit den gleichen Zusätzen an Stroh und Humus aus einer Miete wie in 1,c homogenisiert und wie nach 1,b als Miete aufgesetzt und biologisch umgesetzt.

Es werden nach etwa 4 Monaten 600kg Humus als Naturdünger mit einem Volumen von 1,5 m³ erzeugt mit folgenden Nährstoffgehalten (kg): 24 N; 16 P₂O₅; 13 K₂O; 15 CaO; 5M_{g}O Danach werden in gleicher Weise weitere Mieten hergestellt.

Das Verfahren der Erfindung bietet somit die Möglichkeit, die Pflanzennährstoffe aus der Gülle in den Kreislauf der Natur zurückzuführen und auch diesen Nährstoffgehalt durch weiter folgende Mieten zu erhöhen.

Nach dem Setzen der Miete beliebiger Breite und Länge, entsprechend der gegebenen Bodenfläche, steigt die Temperatur in den ersten 3 Tagen um etwa 10°C, danach stagniert diese im allgemeinen einige Tage.

Danach erfolgt ein Temperaturanstieg von täglich 3-5°C, bis eine Maximaltemperatur erreicht ist. Diese beträgt im allgemeinen 62-70°C.

Die erreicht Endtemperatur hält über mehrere Wochen an. Danach fällt die Temperatur dann langsam auf unter 40°C ab. Dieser Zeitraum dauert im allgemeinen 3 - 4 Wochen.

Der Temperaturanstieg und die Dauer der Erhitzung garantieren einen hygienisch einwandfreien, stabilen Humus.

Für das Verfahren nach der Erfindung ist es ein technischer und wirtschaflicher Vorteil, dass die Miete nach dem Setzen bis zum Endzustand nicht umgesetzt werden muss. Darin liegt ein erheblicher arbeitstechnischer Vorteil.

Messergebnisse zeigen, dass bis zur 6. Woche der Rottezeit noch ein Gehalt von 5% O₂ in der Miete gemessen wurde.

Ein Schwefelgehalt war bereits nach 10 Tagen nicht mehr nachzuweisen.

Die Umsetzung in der Miete erfolgt von aussen nach innen. Es ist unter der Sägemehlabdeckung nach etwa 6 Wochen eine mit Pilzmyzel durchgezogene Humusschicht sichtbar, die bereits eine Dicke von 20-50 cm aufweist.

Die darunter befindliche Rottemasse hat den Geruch warmer Grassilage, der ein leichter Ammoniak-Geruch anhaftet.

Darunter befindet sich eine Schicht Rottemasse, die sich wie frisch eingefüllt darstellt. Der Rottemasse haftet ebenfalls ein leichter Ammoniak-Geruch an.

Das Verfahren nach der Erfindung bietet den Vorteil, dass zu keinem Zeitpunkt des Umsetzungsprozesses Ammoniak-Emissionen durch Messung oder durch Geruch feststellbar sind. Die Miete mit allseitiger Deckschicht stellt also ein in sich geschlossenes System dar.

Das folgende Beispiel erläutert die Herstellung eines Humus als Brennstoff aus kommunalem Klärschlamm oder aus Gülle.

Diese Prozessführung des Verfahrens nach der Erfindung kommt besonders damit infrage, wenn ein hoher Anfall dieser Abfallstoffe nicht in Form von Humus zu verwerten ist. Dieses Beispiel betrifft die Entsorgung dieser Abfallstoffe durch Verbrennung.

Beispiel 2,a: Es werden in einer ersten Miete 1000kg kommunaler Klärschlamm mit 8% TS mit 50 kg Stroh und mit 260 kg Sägemehl in der gleichen Arbeitsweise, wie Beispiel 1, durch Vermischen homogenisiert. Danach erfolgt das Ausschnecken aus dem Mischer über ein Transportband mit beliebiger Höheneinstellung zum Setzen der Miete. Diese homogenisierte Mischung wird auf eine Unterschicht aus 40kg Sägemehl oder aus 60kg Humus einer zuvor erzeugten Miete oder aus zerkleinertem Stroh in einer Höhe von 20-25 cm aufgeschichtet, und die Miete wird mit einer Deckschicht aus Sägemehl oder mit dem Humus einer zuvor erzeugten Miete in Höhe von 30cm überschichtet und abgedeckt. Es wird eine solche Menge an Sägemehl zur Homogenisierung eingesetzt, dass ein TS-Gehalt von 29,5% erreicht wird. Der Mengenbedarf kann auch durch eine analytische Probemischung im Kleinmischer oder durch Rechnung ermittelt werden.

Nach einer Dauer von 3-6 Monaten ist ein als Brennstoff einsetzbarer Humus mit einem Volumen von 1,5 m³ aus einem ursprünglichen Volumen von 1 m³ entstanden in einer Menge von 520kg.

Beispiel 2,b: Es werden in einer zweiten Miete 1000kg kommunaler Klärschlamm mit 8% TS mit 20kg Stroh und mit 80 kg Sägemehl, sowie mit 270 kg TS aus Humus einer zuvor erzeugten Miete homogenisiert.

Bei gleicher Unterlage und Deckschicht wie in 2,a wird auch bei dieser Durchführung des Verfahrens nach der Erfindung nach 1,a bis 1,d ein Humus als Brennstoff nach 3-6 Monaten mit einem Volumen von 1,75 m³, auf 1 m³ ursprüngliches Volumen bezogen, in einer Menge von etwa 620kg erzeugt.

Danach werden in gleicher Weise eine dritte und vierte und gegebenenfalls weitere Mieten zur Erzeugung von Humus als Brennstoff errichtet.

Der Humus nach dem Verfahren nach der Erfindung vermeidet also die Notwendigkeit eines Aufkalkens von kommunalem Klärschlamm und dessen Deponierung durch Aufhaldung oder durch Ausbringen durch Verteilung auf der Ackerfläche.

Es wird also nach dem Verfahren nach der Erfindung eine Ammoniakfreisetzung vermieden, die zu einer Umwandlung in Nitrat und andere Stickstoffoxide und zu saurem Regen führt.

Ein technischer Effekt des Verfahrens nach der Erfindung beruht auf der Herstellung einer homogenen, festen Phase als Stoffgemisch. Es wird dadurch auch das Entweichen von zuviel Feuchtigkeit vermieden, die zur mikrobiellen Umsetzung erforderlich ist.

Es wird durch das Verfahren nach der Erfindung in Verbindung mit der Stoffauswahl und deren Homogenisierung der allmähliche Anstieg der Mietetemperatur auf etwa 60 bis 70°C in etwa 2-3 Wochen erreicht und eine anfängliche Überhitzung auf 70°C und höher verhindert. Mit Fortschreiten der Mieteumsetzung findet ein langsamer Rückgang der Umsetzungstemperatur statt.

Ein anderer technischer Effekt des Verfahrens nach der Erfindung beruht ebenso auf der Auswahl der eingesetzten Stoffe, insbesondere auf der Homogenisierung der zugesetzten Menge an Sägemehl. Es kann dadurch der TS-Gehalt des erzeugten Humus gesteuert werden, und es wird mit dieser Stoffauswahl das sichere Einbinden der flüssigen Phase erreicht, auch wenn diese nur einen geringeren Gehalt an TS hat. Diese Stoffauswahl hat also eine hohe Adsorptionskapazität.

Der nach dem Verfahren nach der Erfindung erzeugte stabile Humus hat die Farbe und die krümelige Struktur von Torf, ist jedoch nicht sauer.

Dieser kann daher auch anstelle von Torf als Bodenlockerungsmittel verwendet werden, wobei die Nährstoffgehalte gleichzeitig als Düngemittel wirken.

Ein bedeutender, volkswirtschaftlicher Vorteil des Verfahrens nach der Erfindung liegt darin, dass dieses eine Viehhaltung ohne die Notwendigkeit des Ausbringens von Gülle gestattet.

Es wird damit eine Bodenbelastung durch Versickerung und eine Verseuchung des Grundwassers verhindert.

Das Verfahren gestattet also durch die Aufbereitung der bei der Viehhaltung entstehenden Gülle eine Viehhaltung unabhängig von einer Bodenfläche.

Es wird durch das Verfahren nach der Erfindung eine Umweltbelastung durch Ammoniak praktisch vermieden und damit auch die Bildung saurer Stickstoffprodukte durch Oxidation, die zum Waldsterben beitragen.

Das Verfahren nach der Erfindung bietet somit durch die Vermeidung von Ammoniakemission einen erheblichen, volkswirtschaftlichen Vorteil neben der Vermeidung der Umweltbelastung durch Gülle und Klärschlamm.

## Patentansprüche

1. Verfahren zur ammoniakemissionsfreien Herstellung von Humus aus einem Abfallstoff in Form von Gülle oder kommunalem Klärschlamm durch Kompostierung einer Mischung aus dem Abfallstoff, Stroh und Sägemehl in einer Miete, wobei die Miete durch eine mindestens 20 cm dicke Schicht aus Sägemehl abgedeckt wird,
wobei 2 bis 5 Gew.-% an zerkleinertem Stroh, bezogen auf den Abfallstoff, und Sägemehl in einer solchen Menge mit dem Abfallstoff vermischt werden, daß die flüssige Phase des Abfallstoffs eingebunden wird,
wobei die erhaltene Mischung auf einer 20 bis 30 cm dicken Unterschicht aus Sägemehl oder Stroh zu einer Miete aufgesetzt wird, und
wobei die aufgesetzte Miete mit einer Deckschicht aus Sägemehl bis 40 cm Dicke so abgedeckt wird, daß ein Sauerstoff- oder Lufteintritt in die Miete verhindert und die so entstandene Miete durch einen anaeroben Prozeß während eines Zeitraumes von 4 bis 6 Monaten umgesetzt wird.

2. Verfahren nach Anspruch 1, dadurch gekennzeichnet, daß für eine weitere, zweite Miete die gleiche Menge an Abfallstoff wie bei der Herstellung der ersten Miete mit 2 bis 3 Gew.-% an zerkleinertem Stroh, bezogen auf den Abfallstoff, mit Sägemehl in einer Menge von etwa einem Fünftel der in der ersten Miete verwandten Menge an Sägemehl und mit einer solchen Menge an Humus aus der ersten Miete gemischt wird, daß die flüssige Phase des Abfallstoffs eingebunden wird, und daß weiter wie bei der Herstellung der ersten Miete verfahren wird.

3. Verfahren nach Anspruch 2, dadurch gekennzeichnet, daß noch eine weitere, dritte Miete hergestellt wird, indem Abfallstoff mit 2 bis 5 Gew.-% an zerkleinertem Stroh, bezogen auf den Abfallstoff, und mit einer solchen Menge Humus aus der zweiten Miete gemischt wird, daß die flüssige Phase des Abfallstoffs eingebunden wird, und indem weiter wie bei der Herstellung der ersten Miete verfahren wird, und daß in gleicher Weise eine vierte und gegebenenfalls weitere Mieten hergestellt werden.

4. Verfahren nach einem der Ansprüche 1 bis 3, dadurch gekennzeichnet, daß der Mischung aus dem Abfallstoff, Stroh und Sägemehl Pilzimpfstoffe zugesetzt werden.

5. Verfahren nach einem der Ansprüche 1 bis 4, dadurch gekennzeichnet, daß auf die Deckschicht eine Abdeckung aus einer Kunststofffolie aufgebracht wird.

6. Verfahren nach einem der Ansprüche 1 bis 5, dadurch gekennzeichnet, daß die Herstellung der Mischung aus dem Abfallstoff, Stroh und Sägemehl in einem sich langsam drehenden, mit einer Schnecke versehenen Zwangsmischer erfolgt, die erhaltene Mischung aus diesem ausgeschneckt, auf ein Transportband aufgebracht und zu Mieten mit einer Höhe von 3 bis 4 m, mit einer Breite von ca. 6 bis 8 m und mit beliebiger Länge auf der Unterschicht aufgesetzt wird.

7. Verfahren nach einem der Ansprüche 1 bis 6, dadurch gekennzeichnet, daß die Kompostierung beendet wird, sobald die aus kontinuierlicher oder periodischer Messung etwa in der Mitte der Miete, im Querschnitt gerechnet, ermittelte Temperatur einen gleichbleibenden Minimalwert erreicht hat.

8. Verfahren nach einem der Ansprüche 1 bis 7, dadurch gekennzeichnet, daß anstelle von Sägemehl auch Stoffe wie Holzfaserstoff, Holzschliff, Holzmehl oder Holzstaub aus Rinde oder Baumschnitt verwendet werden können.

9. Verfahren nach einem der Ansprüche 1 bis 8, dadurch gekennzeichnet, daß anstelle von Holzabfallstoffen auch alle zellulosehaltigen Biomassen, die sich im frischezustand feucht durch Sillierung konservieren lassen, verwendet werden können.

10. Verfahren nach einem der Ansprüche 1 bis 9, dadurch gekennzeichnet, daß alle biologischen Abfallstoffe mit verwendet werden können, wobei die Abdeckung und Unterlage auch aus einem Gemisch von Sägemehl und Humus aus einer zuvor erzeugten Miete oder zerkleinerten Biomasse sein kann.

11. Verwendung des nach einem der Ansprüche 1 bis 10 hergestellten Humus als Filterhumus, lagerfähigen Brennstoff oder als Bodenverbesserungsmittel zur Verhinderung von Nitrateintrag in das Grundwasser und/oder zur Verhinderung von Erosion durch Wind und Wasser und zur Verwendung in Naturschutzgebieten.

## Claims

1. A process for producing humus without ammonia emissions from refuse in the form of liquid manure or municipal sewage sludge by composting a mixture of the refuse, straw and sawdust in a compost heap, the compost heap being capped by a layer of sawdust at least 20 cm thick,
in which 2 to 5% by weight of comminuted straw relative to the refuse, and sawdust is mixed with the refuse in such quantity that the liquid phase of the refuse becomes bound,
in which the resulting mixture is superposed on a substrate of sawdust or straw 20 to 30 cm thick to form a compost heap, and
in which the formed compost heap is capped with a cover layer of sawdust up to 40 cm thick, so that penetration of oxygen or air into the compost heap is prevented and the so-created compost heap is decomposed by an anaerobic process over a period of 4 to 6 months.

2. A process according to claim 1, characterized in that, for an additional, second compost heap, there is mixed the same quantity of refuse as in the production of the first compost heap with 2 to 3% by weight of comminuted straw relative to the refuse, with sawdust in a quantity of about 1/5 the quantity of sawdust used in the first compost heap, and with such a quantity of humus from the first compost heap that the liquid phase of the refuse becomes bound, and that one proceeds further in the same way as in the production of the first compost heap.

3. A process according to claim 2, characterized in that there is produced still another, third compost heap by mixing refuse with 2 to 5% by weight of comminuted straw relative to the refuse, and with such a quantity of humus from the second compost heap that the liquid phase refuse becomes bound, and in which one proceeds further as in the production of the first refuse heap, and that a fourth and potentially additional compost heaps are produced in the same manner.

4. A process according to any one of claims 1 to 3, characterized in that fungal inoculants are added to the mixture of refuse, straw and sawdust.

5. A process according to any one of claims 1 to 4, characterized in that a cover made of a synthetic plastic sheet is applied to the capping layer.

6. A process according to any one of claims 1 to 5, characterized in that the production of the mixture of refuse, straw and sawdust takes place in a slowly rotating positive mixer equipped with a worm, the resulting mixture is extruded by the worm, applied to a conveyor web and piled up on the substrate into compost heaps having a height of 3 to 4m, a width of about 6 to 8m and any desired length.

7. A process according to any one of claims 1 to 6, characterized in that the composting is terminated as soon as the temperature determined by continuous or periodic measurement taken approximately at the cross-sectional center of the compost heap, has reached a constant minimum value.

8. A process according to any one claims 1 to 7, characterized in that, instead of sawdust there can also be used materials such as wood fibers, wood pulp, wood powder, or wood dust from bark or tree cuttings.

9. A process according to any one of claims 1 to 8 characterized in that, instead of waste, there can also be used any cellulose-containing biomasses which can be kept moist in their fresh state through ensiling.

10. A process according to any one of claims 1 to 9, characterized in that any biological waste material can be used as additives and the capping and substrate can also be a mixture of sawdust and humus from a previously produced compost heap or comminuted biomass.

11. The use of the humus produced according to any one of claims 1 to 10 as filtering humus, storable fuel, or as soil beneficiation material to prevent nitrate penetration into the groundwater and/or to prevent erosion by wind and water and for use in nature preserves.

## Revendications

1. Procédé pour la préparation d'humus sans dégagement d'ammoniac à partir d'un déchet se présentant sous la forme d'un lisier ou de boues de curage communales, par compostage d'un mélange constitué du déchet, de paille et de sciure de bois, dans un silo, procédé selon lequel le silo est recouvert d'une couche de sciure de bois épaisse d'au moins 20 cm, et on mélange au déchet 2 à 5 % en poids de paille broyée, rapportée au déchet, et de la sciure de bois, en une quantité telle que la phase liquide du déchet soit liée, le mélange obtenu étant dressé pour former un silo sur une couche inférieure de sciure de bois ou de paille épaisse de 20 à 30 cm, et le silo érigé étant recouvert d'une couche supérieure de sciure de bois d'une épaisseur pouvant atteindre 40 cm, de façon à ce qu'une pénétration d'oxygène ou d'air dans le silo soit empêchée et que le silo ainsi formé soit transformé par un processus anaérobie pendant une période de 4 à 6 mois.

2. Procédé suivant la revendication 1, caractérisé en ce qu'on prépare un deuxième silo, en mélangeant une quantité de déchet identique à celle ayant servi pour la préparation du premier silo, avec 2 à 3 % en poids de paille broyée, rapportée au déchet, avec de la sciure de bois en une quantité d'à peu près un cinquième de la quantité de sciure de bois utilisée dans le premier silo, et avec une quantité telle d'humus provenant du premier silo que la phase liquide du déchet soit liée, et en ce qu'on poursuit le procédé comme pour la préparation du premier silo.

3. Procédé suivant la revendication 2, caractérisé en ce qu'on prépare encore un troisième silo, en mélangeant le déchet avec 2 à 5 % en poids de paille broyée, rapportée au déchet, et avec une quantité telle d'humus provenant du deuxième silo que la phase liquide du déchet soit liée, et en poursuivant le procédé comme pour la préparation du premier silo, et en ce qu'un quatrième silo et le cas échéant d'autres silos sont dressés de la même manière.

4. Procédé suivant l'une des revendications 1 à 3, caractérisé en ce qu'on ajoute des agents d'inoculation de champignons au mélange constitué du déchet, de paille et de sciure de bois.

5. Procédé suivant l'une des revendications 1 à 4, caractérisé en ce qu'on pose sur la couche supérieure une couverture constituée d'une feuille de plastique.

6. Procédé suivant l'une des revendications 1 à 5, caractérisé en ce que la préparation du mélange constitué du déchet, de paille et de sciure de bois a lieu dans un malaxeur à mélange forcé tournant lentement et équipé d'une vis, et en ce que le mélange obtenu est poussé hors de ce dernier par la vis, déposé sur une bande transporteuse et dressé en silos d'une hauteur de 3 à 4 m, d'une largeur de 6 à 8 m, environ, et d'une longueur quelconque, sur la couche inférieure.

7. Procédé suivant l'une des revendications 1 à 6, caractérisé en ce qu'il est mis fin au compostage dès que la température déterminée par des relevés continus ou périodiques à peu près au centre du silo, en section transversale, a atteint une valeur minimum constante.

8. Procédé suivant l'une des revendications 1 à 7, caractérisé en ce qu'au lieu de sciure de bois, on peut également utiliser des matières comme la fibre de bois, la pâte de bois, la farine de bois ou la poussière de bois provenant d'écorces ou de coupes d'arbres.

9. Procédé suivant l'une des revendications 1 à 8, caractérisé en ce qu'au lieu de déchets de bois, on peut également utiliser toutes les biomasses contenant de la cellulose qui se conservent humides à l'état frais, par ensilage.

10. Procédé suivant l'une des revendications 1 à 9, caractérisé en ce que tous les déchets biologiques peuvent être utilisés en même temps, auquel cas la couverture et la couche inférieure peuvent également être constituées d'un mélange de sciure de bois et d'humus en provenance d'un silo dressé auparavant ou de biomasse broyée.

11. Utilisation de l'humus préparé suivant l'une des revendications 1 à 10, comme humus filtrant, comme combustible stockable ou comme amendement du sol, pour empêcher l'entraînement de nitrates dans la nappe phréatique et/ou pour empêcher l'érosion par le vent et l'eau et pour être utilisé dans des réserves naturelles.
